(19)

Europäisches Patentamt
European Patent Office
Office européen des brevets

(11) **EP 3 992 862 B1**

(12) **EUROPEAN PATENT SPECIFICATION**

(45) Date of publication and mention
of the grant of the patent:
**24.12.2025  Bulletin 2025/52**

(21) Application number: **20204239.6**

(22) Date of filing: **28.10.2020**

(51) International Patent Classification (IPC):
**G06N 3/065** (2023.01)  **G06G 7/14** (2006.01)
**G06G 7/16** (2006.01)

(52) Cooperative Patent Classification (CPC):
**G06G 7/14; G06G 7/16; G06N 3/065**

(54) **ELECTRONIC CIRCUIT FOR CALCULATING WEIGHTED SUMS**

ELEKTRONISCHE SCHALTUNG ZUR BERECHNUNG VON GEWICHTETEN SUMMEN

CIRCUIT ÉLECTRONIQUE POUR CALCULER DES SOMMES PONDÉRÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.05.2022  Bulletin 2022/18**

(73) Proprietor: **Fraunhofer-Gesellschaft zur
Förderung
der angewandten Forschung e.V.
80686 München (DE)**

(72) Inventors:
• **Herzer, Elmar
91058 Erlangen (DE)**
• **Müller, Roland
91058 Erlangen (DE)**

(74) Representative: **Gagel, Roland
Patentanwalt Dr. Roland Gagel
Landsberger Strasse 480a
81241 München (DE)**

(56) References cited:
**WO-A1-2018/148293     US-A1- 2020 034 686
US-B2- 9 948 181**

• **VO MINH-HUAN: "Multilayer Neural Network with
Synapse Based on Two Successive Memristors",
vol. 12, no. 1, 31 December 2018 (2018-12-31),
pages 132 - 147, XP055798023, ISSN: 1874-1290,
Retrieved from the Internet <URL:https://
benthamopen.com/contents/pdf/TOEEJ/
TOEEJ-12-132.pdf> [retrieved on 20210421], DOI:
10.2174/1874129001812010132**
• **KRESTINSKAYA O ET AL: "Memristive GAN in
Analog", SCIENTIFIC REPORTS, 3 April 2020
(2020-04-03), England, pages 1 - 14,
XP055797695, Retrieved from the Internet
<URL:https://www.nature.com/articles/
s41598-020-62676-7.pdf?proof=t> [retrieved on
20210421], DOI: 10.1038/s41598-020-62676-7**
• **CAN LI ET AL: "Efficient and self-adaptive in-situ
learning in multilayer memristor neural
networks", NATURE COMMUNICATIONS, vol. 9,
no. 1, 19 June 2018 (2018-06-19), XP055693523,
DOI: 10.1038/s41467-018-04484-2**

EP 3 992 862 B1

**Description**

BACKGROUND OF THE INVENTION

The present invention relates to an electronic circuit for calculating weighted sums of input voltages, at least comprising several input lines to which the input voltages are applied, and at least one summation unit being formed of a first and a second output line and several coupling units connecting the input lines to the output lines, each of the coupling units providing at least one individual weight factor for weighted coupling an input voltage on the corresponding input line to the output line.

Artificial neural networks (ANNs) solve nowadays classification problems by recognizing patterns. Neuromorphic hardware uses dedicated architectures inspired in the human brain with circuits that mimic the neurons and synapses. Conventional approaches use an arithmetic logical unit (ALU), a control unit and a memory unit to compute ANNs with the well know von Neumann architecture. However, the performance of this architecture is limited by the data rate of the bus that transfers the data from and to the memory block. Therefore, a distributed architecture where the computing takes place in memory, called in-memory computing, imitates better the human brain and has a better performance than the von Neumann approach. A well-known analog implementation of ANNs with in-memory computing is the crossbar architecture.

There is often the need to calculate weighted sums, especially when realizing artificial intelligence or for other applications of matrix multiplication. This applies in particular for applications in which the output value *Value*(*out*) of one output is based on all or a subset of the N input values *Value(in_i)* ; $i \in [1, ..., N]$ weighted by individual weight factors *Weight_i* ; $i \in [1, ..., N]$.

$$Value(out) = OverallScaleFactor * \left( \sum_{i=1}^{N} Weight_i * Value(in_i) \right)$$

For some problems the weights are all positive, but a general approach has both positive and negative weight values.

For AI (Artificial Intelligence) there is not an exact input signal and the output would be treated in a nonlinear way after calculating the weighted sum, that's why this weighted sum can be calculated with limited accuracy. For limited accuracy, it is more energy efficient to do a multiplication in an analog circuit than in a digital circuit. Furthermore, this circuit implemented in an analog way takes less area for its implementation on a chip.

PRIOR ART

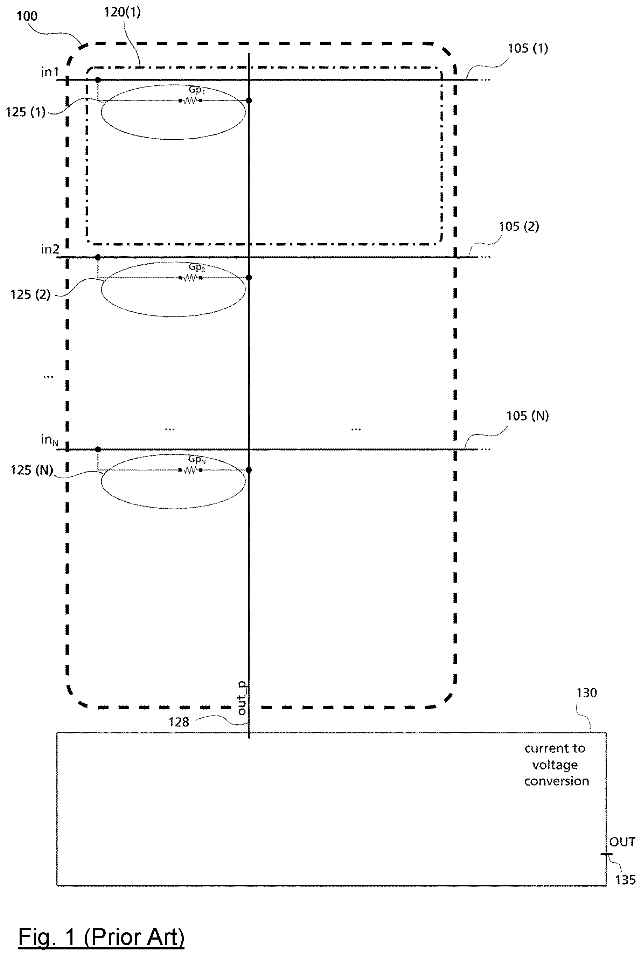

A known approach for calculating weighted sums uses a crossbar architecture. Fig. 1 shows such a way to calculate a weighted sum of values in a circuit 100 by providing the N input values as voltages in1, in2, ..., in_N to input lines 105 (1) ... 105 (N). This represents a neuromorphic crossbar circuit.

Since this can emulate a part of a computational neuronal structure the parts of the circuit in the following will be named like neuronal structures. The part 100 that collects the inputs corresponds to the cell body named also soma and therefore will be also called soma. The part 120 that connects one input with one output for summing is often named synapse. When there is a synapse 120 from each input to each output the crossbar made from somas like part 100 is called fully connected. There might be also only a few synaptic connections in a soma. Normally there are several outputs so the structure is repeated to the right hand side where the same inputs feed another soma with another set of weights.

The synapses 120(i) comprise a circuit 125(i) that accomplishes the coupling between the input and the output. The output of the soma 100 is a current on the out_p output line 128 from the soma to a current to voltage conversion unit 130 which might output the result of the analog calculation as a voltage at its OUT terminal 135. Since the inputs are voltages V and the outputs are currents *I*, the coupling circuits 125(i) must act like conductances G to convert the physical representations by *I* = *G* * V. Keeping the voltage on out_p output line 128 on a certain value, the voltage difference to each input together with the conductance of the coupling circuit 125 will define a current $G_i * [V(in_i) - V(out_p)]$ from each input that sums up with the currents from the other inputs for the weighted sum to be calculated. Therefore, the circuit 125 needs to provide a defined conductance from input to output.

In a neuronal network, the conductance of each synapse needs to be set individually to a value which is found by a learning process. For a single application with values known from a previous learning process the conductances can be built in hardware having their individual values for implementing a calculation with then fixed weights. Normally their value can be changed to be able to implement various calculations with various sets of weights.

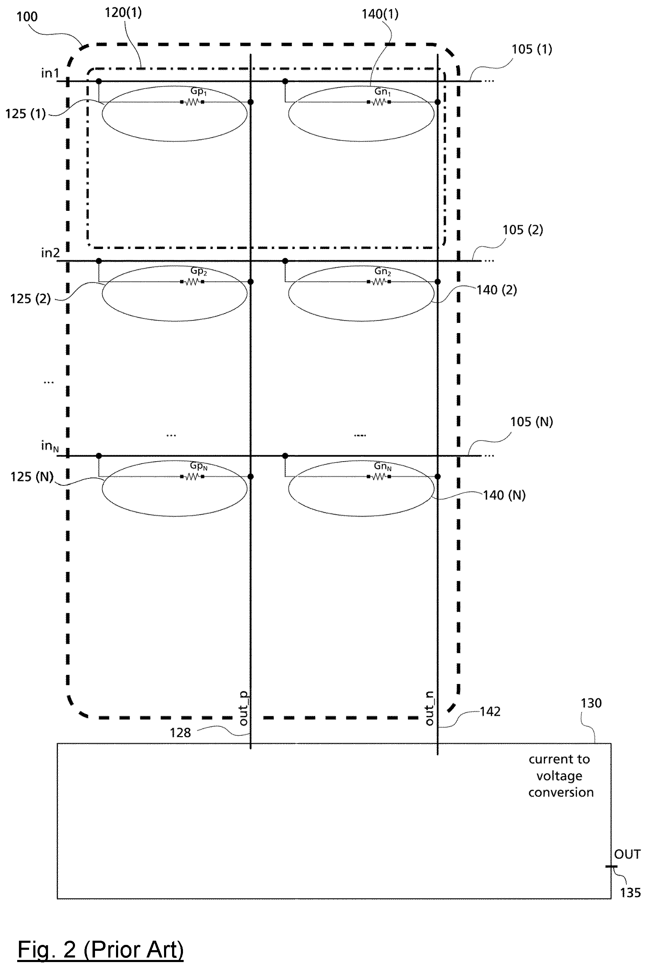

If there are only positive conductances, it is only possible to calculate positive weights. When negative weights are needed, the circuit shown in Fig. 2 provides a solution. While the contributions to be taken positive are still weighted by the conductances Gpi of the synapses 120(i), the contributions to be taken negative are also weighted positive by the conductances Gni of the now added coupling circuits 140(i) but collected in a second output line out_n 142. The contribution of this resulting second output current is then subtracted from the contribution of the resulting current at out_p 128 in the current to voltage conversion unit 130, which provides an output signal voltage at OUT terminal 135.

For each input and each soma, there are the output currents $I_{out\_p}$ and $I_{out\_n}$ on the branches out_p and out_n:

$$I_{out\_p} = \sum_{i=1}^{N} Gp_i * V(in_i)$$

$$I_{out\_n} = \sum_{i=1}^{N} Gn_i * V(in_i)$$

With a conversion factor $R_{TIA}$ of a current to voltage conversion unit an output voltage at the output 135 is given by

$$V_{OUT} = R_{TIA} \left( \sum_{i=1}^{N} Gp_i * V(in_i) - \sum_{i=1}^{N} Gn_i * V(in_i) \right)$$

This calculates the sum of the inputs $in_i$ weighted by the factors Gpi for positive contribution and the factors Gni for negative contribution with $Gpi_i,>0$, Gni >0. This equation is meant to implement the more general representation for calculating a weighted sum of

$$V_{OUT} = R_{TIA} \left( \sum_{i=1}^{N} G_i * V(in_i) \right)$$

where $G_i$ can represent both positive and negative weight values. To do so, the conductances $Gp_i$ and $Gn_i$ are selected as

$$\begin{cases} Gp_i = G_i & Gn_i = 0 & ; G_i \geq 0 \\ Gp_i = 0 & Gn_i = -G_i & ; G_i < 0 \end{cases}$$

The variable conductances in the synapses 120 can be implemented in different way. For example, resistors in combination with switches or memristors can be used.

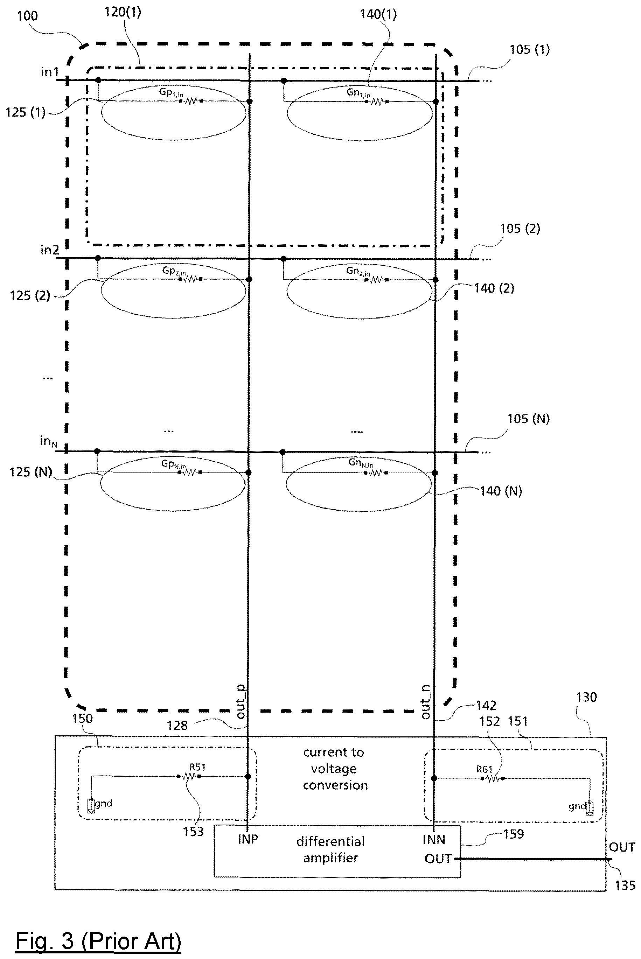

There are several ways to measure the currents $I_{out\_p}$ and $I_{out\_n}$ flowing out of the crossbar circuit at out_p and out_n. Fig. 3 shows a circuit where the currents are guided to a common potential gnd through shunt circuits 150 and 151 where the currents are converted to voltages across these circuits which are proportional to the currents. The difference of these voltages is transferred to OUT 135 by means of a differential amplifier 159, so the difference of the currents is converted into an output voltage provided at OUT 135. The shunt circuits can be built from fixed resistors 152 and 153. Also, a variable resistance is possible by usage of switched resistors or memristors which can be used to calibrate the circuit. Like in any current measurement by shunt, these resistors need to be small not to influence the result very much. This leads to a fairly constant voltage on the summation or output lines 128 and 142. The small shunt resistors lead to two problems. The first one is noise. If the resistance is very small, the voltages across them are also very low. That means that the differential amplifier 159 must be configured to amplify the signal again. In this case, the signal might be smaller than the noise of the amplifier. The second problem are process and temperature variations. If the resistors are small, the matching between the resistors in synapses 120 and the shunt resistors will be bad because of different sizing. This leads to conversion errors.

O. Krestingskaya, B. Choubey und A. P. James, "Memristive GAN in Analog," Scientific Reports, Nr. 10-5838, 2020, p. 1 to 14, describe a similar circuit as that of Fig.3 in which the shunt circuits are formed from a number of memristors or resistors in parallel. The number if these resistors is selected to achieve a specific load resistance.

When connecting the shunt circuits 150 and 151 of Figure 3 to the output OUT and to an inverted output OUT_N, respectively, of a differential amplifier, instead of connecting it to a gnd potential, the circuits 150 and 151 build a feedback path and the circuit is then built as a transimpedance amplifier. The advantage of such a circuit is that the resistors used to measure the currents do not influence the result anymore. Disadvantages of this procedure are: The transimpedance amplifier (TIA) needs to feed the same current into the summing node as all the sum of currents to be taken positive plus the sum of currents taken to be negative are. This means that there is an additional power consumption in the feedback paths. Since the output nodes are held to some defined voltage by the current summing stage, there is no local cancelling of currents in the crossbar network. All the current needs to come out at one end of the circuit where there is the summing point. There we see a high current density and the need of wide wires to carry this current. The impedance into the summing nodes is defined by a high number of impedances in parallel, which gives a very low impedance. The TIA therefore needs very low input impedance too, to drive this node properly. The input overflow condition of the TIA would apply to the currents taken positively separately to the currents taken negatively. This circuit calculates:

$$\min(\max(I_{out\_p}, I_{out\_p,min}), I_{out\_p,min}) - \min(\max(I_{out\_n}, I_{out\_n,min}), I_{out\_n,max})$$

instead of the desired function:

$$\min(\max(I_{out\_p} - I_{out\_n}, I_{min}), I_{max}).$$

Currents marked with 'min' or 'max' are the saturation currents given by the transimpedance amplifier. While in the first formula the clipping is applied before summing, there is a smaller range of inputs where the circuit is functional. The last formula shows nonlinearity after summing, which is the desired behavior for AI. Since there is a finite input impedance to the current summing stages, while changing one weight, the influence of the other weights changes. To keep cross coupling small between the weights, the transimpedance amplifier and the wiring of the crossbar need low impedance.

WO 2018/148293 A1 describes a special way of measuring differential currents. While the other methods measure both currents separately and then subtract the results. In this publication, the common mode current is compensated with current sources (158) by a control circuit (157) without being measured. There is only a measuring of the differential current by compensating it iteratively with differential current sources (153) in loops of iterations until a comparator circuit (160) does not show big difference of its inputs any more. This solves the input overflow problem of the transimpedance amplifier. VO MINH-HUAN: "Multilayer Neural Network with Synapse Based on Two Successive Memristors",THE OPEN ELECTRICAL & ELECTRONIC ENGINEERING JOURNAL,vol. 12, no. 1 31 December 2018 (2018-12-31), pages 132-147, XP055798023,ISSN: 1874-1290, DOI: 10.2174/1874129001812010132 describes an electron circuit for calculating weights sums of input voltages. By using a bridge memristor synapse circuit, it can create both positive and negative weighting values that are easy to implement neuromorphic system in hardware.

US 2020/034686 A1 (CHIU PI-FENG [US] ET AL) 30 January 2020 (2020-01-30) describes techniques for exploiting the structure non-volatile memories having a cross-point type of structure for the storage of the weights of the neural networks and for the execution of the multiply-and-accumulation operations within the memory array.

SUMMARY OF THE INVENTION

It is an object of the present invention to provide an electronic circuit for calculating weighted sums, which avoids the above problems, in particular the problem of high current densities in the output line(s), and may be implemented in artificial neuronal networks.

The object is achieved with the electronic circuit according to claim 1. Advantageous embodiments of the circuit are subject of the dependent claims or may be deduced from the subsequent description and exemplary embodiments.

The proposed electronic circuit for calculating weighted sums of input values, coded as analog input voltages, has a crossbar architecture. The electronic circuit at least comprises several input lines to which the input voltages are applied, and at least one summation unit. The summation unit is formed of a first and a second output line, several first coupling units connecting the input lines to the first output line and several second coupling units connecting the input lines to the second output line. The first and second output lines are for summing signals with positive weights and signals with negative weights on different lines as known in the art. Each of the first and second coupling units provides one or several individual weight factors for weighted coupling an input voltage on the corresponding input line to the corresponding output line. The electronic circuit is characterized in that each of the first and second coupling units comprises at least one voltage divider circuit, referenced to a common input potential and allowing to set at least one of said weight factors by a ratio of at least two resistances. For matching purposes, the voltage divider circuits of corresponding first and second coupling units are preferably identical, i.e. also comprise identical corresponding resistances. The voltage divider circuits are arranged and/or controlled - e.g. in case of variable resistances - such that an impedance seen from the output line into any of the coupling units stays constant independent on the weight factors set. To this end the different voltage divider circuits are successively connected to the corresponding output line along the output line so that a local cancelling of currents between successive voltage divider circuits occurs. The two output lines carrying the different weighted signals are preferably connected to a differential voltage measurement means, in particular a differential amplifier, measuring the weighted sum as a differential voltage and providing it as a single-ended voltage signal referenced to a common potential.

With the proposed analog electronic circuit, the weighted sums are output from the crossbar in form of analog voltages instead of currents as output signal, thus avoiding the above problems of current to voltage conversion. The circuit requires less area for wiring as there is no current on the output lines between the summation unit or crossbar and the amplifier. Since the voltages are limited by the applied input voltages there are no input overflow problems of the amplifier. Changing one or several weight values does not influence the other weights. The calculation results only depend on the matching between the resistances of the corresponding voltage divider circuits, i.e. of standard elements. These standard elements are used in every part of the circuit. Thus, there is only small influence of temperature and only small influence of semiconductor process variations. Since the output lines are not held to a certain voltage there can be local current cancelations, the electronic circuit has less power consumption and requires a lower area due to smaller wiring. The high impedance voltage amplifier further reduces power consumption.

The voltage divider circuits are designed such that each voltage divider circuit allows to set one of at least two different available weight values. This can be done already while manufacturing the circuit or while setting up the circuit or while using the circuit. The resistances for setting the weight values in the voltage divider circuits are variable or are formed of switchable resistances. The weight factor can then be varied by changing the switching states.

The proposed electronic circuit may be used for all kinds of mixedsignal KI chips for performing matrix-multiplications or other application requiring the calculation of weighted sums like hybrid filterimplementations.

SHORT DESCRIPTION OF THE DRAWINGS

The proposed electronic circuit is described in the following by means of exemplary embodiments and corresponding figures. The figures show:

Fig. 1     an exemplary electronic circuit of the prior art for calculating weighted sums using the crossbar principle;
Fig. 2     an exemplary electronic circuit of the prior art for calculating weighted sums using the crossbar principle for implementing signed weights;
Fig. 3     an example for current measuring by resistor shunts and amplifier in the electronic circuit of Fig. 2;
Fig. 4     a schematic view of an electronic circuit for calculating weighted sums not according to the present invention, showing the matched voltage divider crossbar with matched attenuator and row feedback principle;
Fig. 5     a schematic view of the electronic circuit of Fig. 4 with additional series resistances in the voltage divider circuits;
Fig. 6     an example of a single voltage divider circuit;
Fig. 7     a representation of the voltage divider circuit of Fig. 6 based on a weight factor with a driving resistance;
Fig. 8     the representation of the first out of N voltage dividers of Fig. 7 which are connected in parallel at their out nodes, where the other voltage N-1 dividers are expressed with an additional load resistor;
Fig. 9     a first exemplary embodiment of the proposed electronic circuit;
Fig. 10    a second exemplary embodiment of the proposed electronic circuit;
Fig. 11    a third exemplary embodiment of the proposed electronic circuit;
Fig. 12    a fourth exemplary embodiment of the proposed electronic circuit; and
Fig. 13    a fifth exemplary embodiment of the proposed electronic circuit.

DETAILED DESCRIPTION OF EMBODIMENTS

The proposed electronic circuit receives the input values as voltages to calculate a weighted sum and outputs a differential voltage as a measure for the weighted sum.

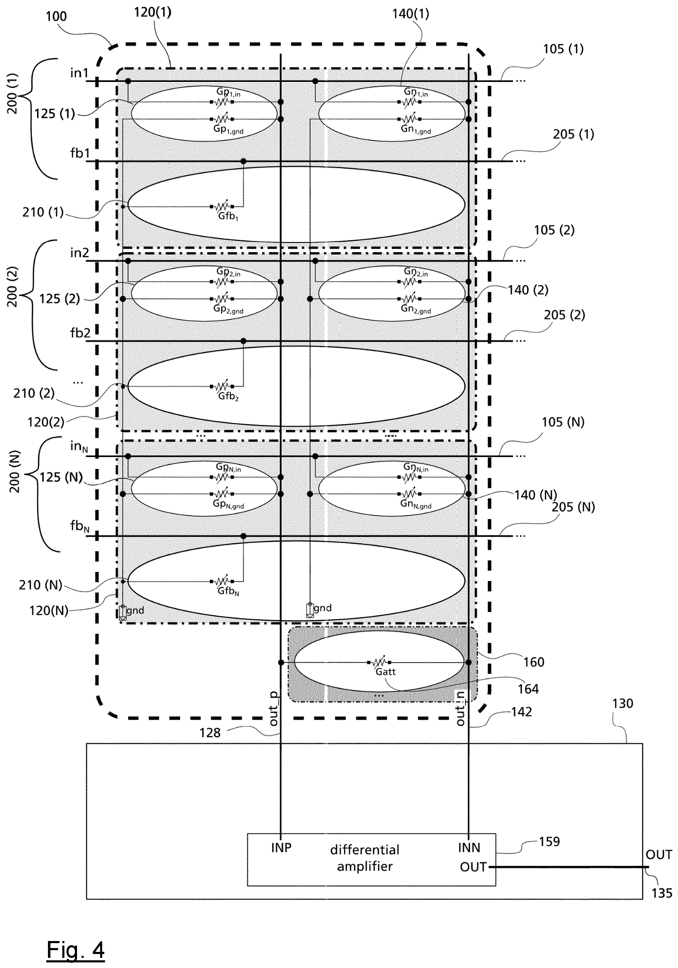

A schematic block overview over a circuit not according to the invention is shown in Fig. 4. The circuit 100 consists of N synapses 120(1) ... 120(N) and might also have an attenuator block 160. Each synapse 120(i), where i=1, ... , N, consists of a first coupling unit comprising a voltage divider circuit 125(i), referenced to the common input potential (gnd), that provides a weight factor from input $in_i$, connected to an input line 105(i), to output out_p (output line 128) and a second coupling unit comprising a voltage divider circuit 140(i), also referenced to the common input potential (gnd), that provides a weight factor from input $in_i$ to output out_n (output line 142). These weight factors given by the voltage dividers might be set to one of at least two different available values while manufacturing the circuit or while setting up the circuit in lab or while using the circuit.

This crossbar topology is intended to be used for example together with a differential measurement means 159 that provides the difference of its input potentials INP and INN on its output OUT 135.

The topology of the voltage divider circuits 125(i) and 140(i) is the same. Their circuit elements are related for matching purposes. They are arranged in such a way that the impedance seen from out_p into any divider circuit 125(i) and seen from out_n into any divider circuit 140(i) stays constant no matter which weight factor is set.

Each synapse 120(i), i=1,...,N might also have a feedback circuit 210(i) that provides a feedback signal $fb_i$ 205 (i) to the stage driving its input $in_i$. This feedback signal gives information about the load to the input by the voltage divider circuits 125(i) and 140(i). This feedback signal might give current or resistance information to be added on the feedback line 205(i) for further somas (summation units) connected on the same input line 105(i).

Further, the attenuator block 160 provides attenuation of the output signal with the same kind of circuit elements as the divider circuits 125(i) and 140(i) for matching purposes. The attenuation factor might be set to one of at least two different available values while manufacturing the circuit or while setting up the circuit in lab or while using the circuit.

The feedback circuits 210(1) to 210(N) and the attenuator circuit 162 are not mandatory. They can be used for additional functionality. The basic functionality is still available if they are omitted.

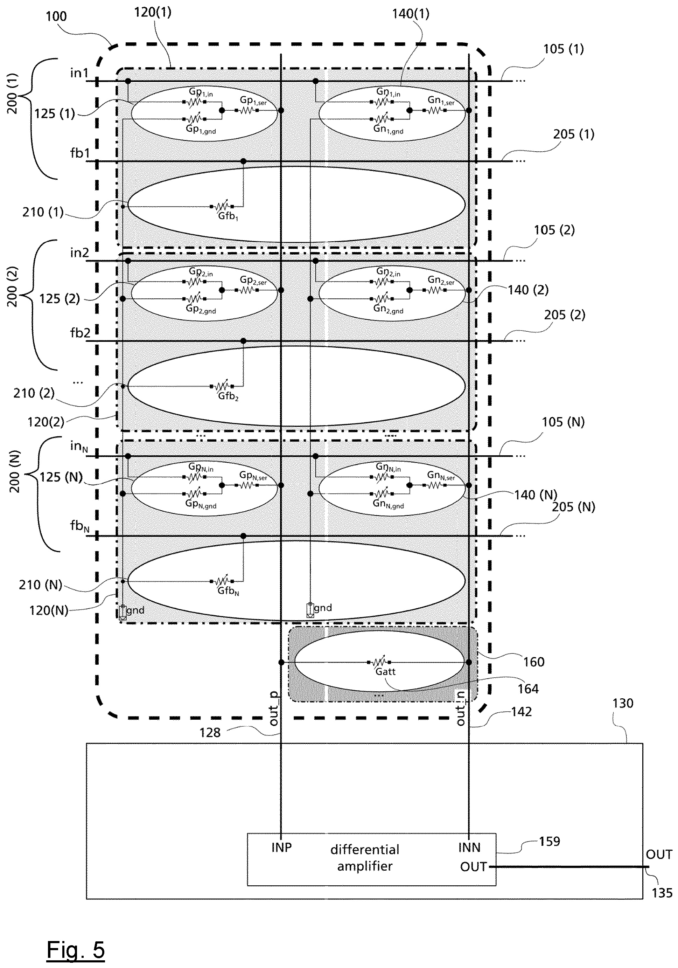

In addition, a resistor ($Rp_{1,ser}$ to $Rp_{N,ser}$ and $Rn_{1,ser}$ to $Rn_{N,ser}$) can be placed in each of the voltage divider circuits to increase the output resistance of the voltage divider circuits 125(i) and 140(i) which reduces the current on the output lines. This is shown in the electronic circuit of Fig. 5.

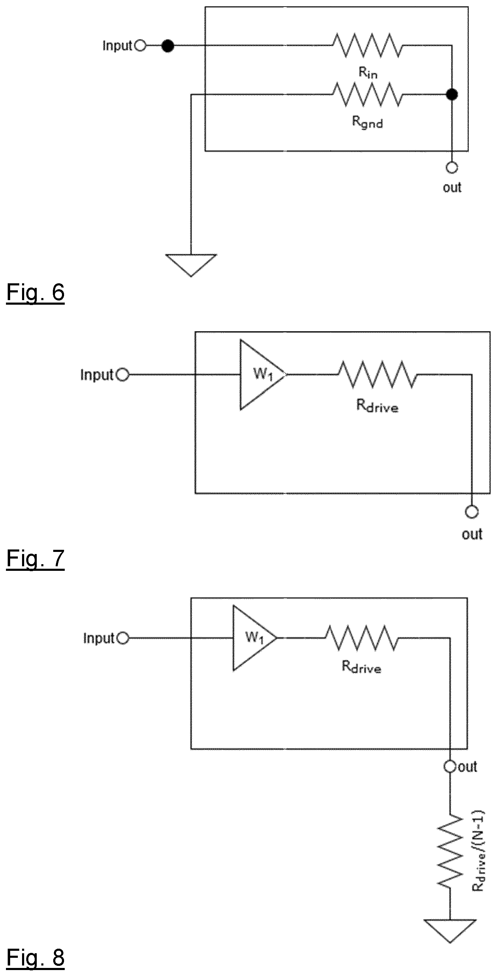

The main feature of the proposed electronic circuit is represented by the voltage divider circuits 125(i) and 140(i), exemplary shown in Fig. 4. The basic design of a single voltage divider circuit is shown in Fig. 6. $R_{in}$ and $R_{gnd}$ are variable resistances. The ratio between the input voltage and voltage on out is given by the ratio between the two resistors. As previously pointed out, the resistors have to be configured in a way so that the output resistance of the voltage divider circuit seen from out respectively is constant no matter of the division factor of this voltage divider.

When the previously mentioned restrictions are fulfilled, this circuit be can also seen as the input voltage weighted by the division factor in series with a driving resistance as shown in Fig. 7. The division factor is named $W_1$ The driving resistance is named $R_{drive}$. The values can be calculated by following equations.

$$W_1 = \frac{R_{gnd}}{R_{gnd} + R_{in}}$$

$$R_{drive} = \frac{R_{in} * R_{gnd}}{R_{in} + R_{gnd}}$$

Connecting multiple of these voltage dividing circuits together along the output line, as in case of the proposed electronic circuit (see e.g. Fig. 4), the driving resistances of all other voltage dividers act as a load resistance to the voltage divider we look at. For the first of N dividers connected together at their out node, the circuit in Fig. 8 results.

The overall weight factor W given by this circuit is shown in following equation.

$$W = \frac{1}{N} * W_1$$

The overall calculation done by this circuit is given by following equation considering multiple inputs.

$$V_{OUT} = \frac{1}{N} * \left( \sum_{i=1}^{N} W_i * V(in_i) \right)$$

In the following several exemplary embodiments of the proposed electronic circuit exemplary embodiments of the proposed electronic circuit are described.

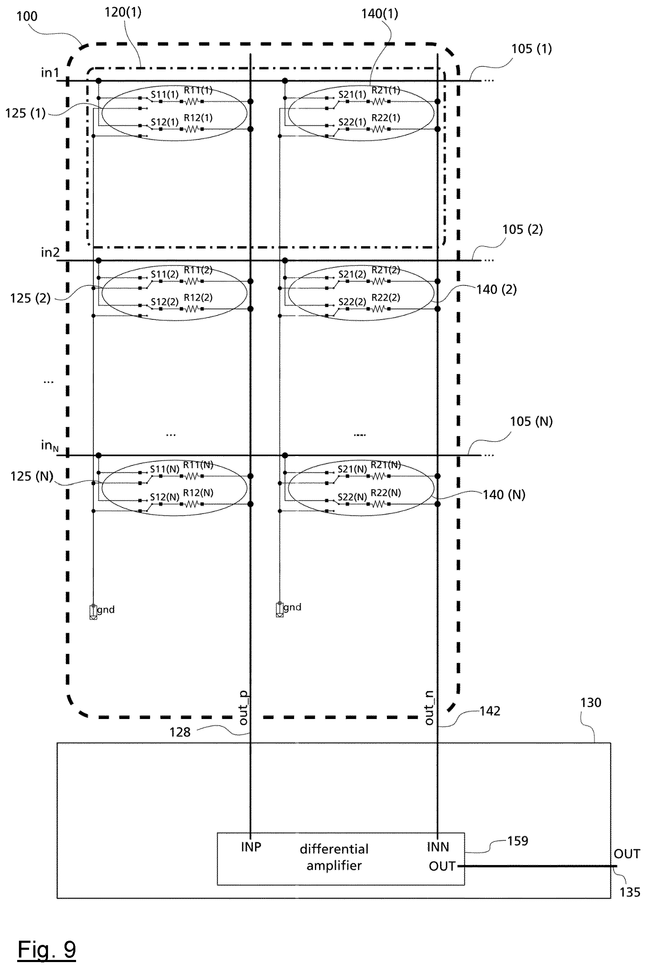

Fig.9 shows a first exemplary embodiment having voltage dividers made from two switched resistors. It is obvious for the skilled person that the voltage dividers of the proposed electronic circuit are not restricted to the number of resistors or memristors shown in this and the following embodiments. In the proposed electronic circuit, a multiplicity of switched resistors or memristors may be used dependent on the intended application.

Each resistor R11(i), R12(i), R21(i) and R22(i) of the $i^{th}$ synapse is connected to a switch S11(i), S12(i), S21(i) and S22(i), respectively, to feed its left end either from an input line or a common potential gnd. The right port of R11(i) and R12(i) is connected to out_p while the right port of R21(i) and R22(i) is connected to out_n. For matching purposes, the resistors R11(i) and R21(i) are from an integer number of units having equal resistance and the resistors R12(i) and R22(i) are from an integer number of units having equal resistance.

The output voltage $V_{OUT}$ value of N voltage dividers connected as shown in Fig. 9 is:

$$V_{OUT} = Gain_{DiffAmp} * \frac{1}{N} * \left( \sum_{i=1}^{N} Wp_i * V(in_i) - \sum_{i=1}^{N} Wn_i * V(in_i) \right)$$

with N weights $Wp_i$ selected from a set of weight factors that can be realized by a single voltage divider with switches S11(i), S12(i) and resistors R11(i) and R12(i) and with N weights $Wn_i$ selected from a set of weight factors that can be realized by a single voltage divider with switches S21(i), S22(i) and resistors R21(i) and R22(i). $Gain_{DiffAmp}$ is the gain of the differential amplifier's input voltage difference by the output voltage where $V_{OUT}$ = $Gain_{DiffAmp}$ * [$V(INP)$ - $V(INN)$]

The output impedance of the summation circuit (soma) 100 at out_p is:

$$R_{OUT\_P} = \frac{1}{N} * \left( \frac{1}{\frac{1}{R11} + \frac{1}{R12}} \right)$$

The output impedance of this circuit 100 at out_n is:

$$R_{OUT\_N} = \frac{1}{N} * \left( \frac{1}{\frac{1}{R21} + \frac{1}{R22}} \right)$$

This output impedance is independent of the switch setting.

When the resistors values within one voltage divider are equal (R11=R12, R21=R22), then 3 different positive and 3 different negative weights values are obtained since one weight can be set in two different ways via the switch connected to it.

When the resistors have different values, it is preferably to have binary weighted values made from unit resistors as follows: R12(i) = 2 * R11(i), R22(i) = 2 * R21(i). This induces seven different weights selectable by the state of switches S11(i), S12(i), S21(i) and S22(i) of one synapse. Thus, the possible weight values, including positive and negative values, are: -1/N, -2/(3N), -1/(3N), 0, 1/(3N), 2/(3N), 1/N.

Beside choosing a binary weighted switched resistor scheme, there is also the possibility to use a R-2R-switched network to realize the coupling resistive divider circuit.

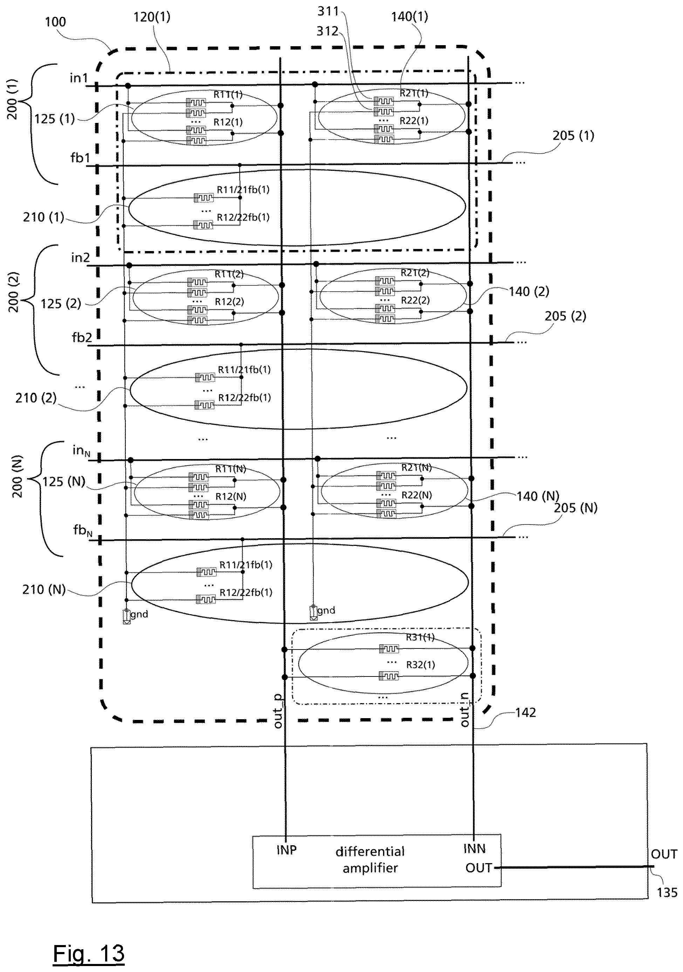

The resistors of any of these circuits can be made from any resistive material or also made from active devices like FET transistors. The switches may be realized using transistors. When using variable resistances that can be controlled by e.g. physical influence like magnetism or electrical field, there might be no need for the switches. This is the case when the circuit is built from FeFETs or memristors, like in the example shown in Fig. 13

Since all the elements in the circuit 120 (i) in the described exemplary embodiment of Fig. 9 are either equal or made from unit devices, there is no dependency on the absolute value of the resistors for the weight factor. Therefore, this circuit presents the advantages that it is very insensitive to changes in production and operation temperature.

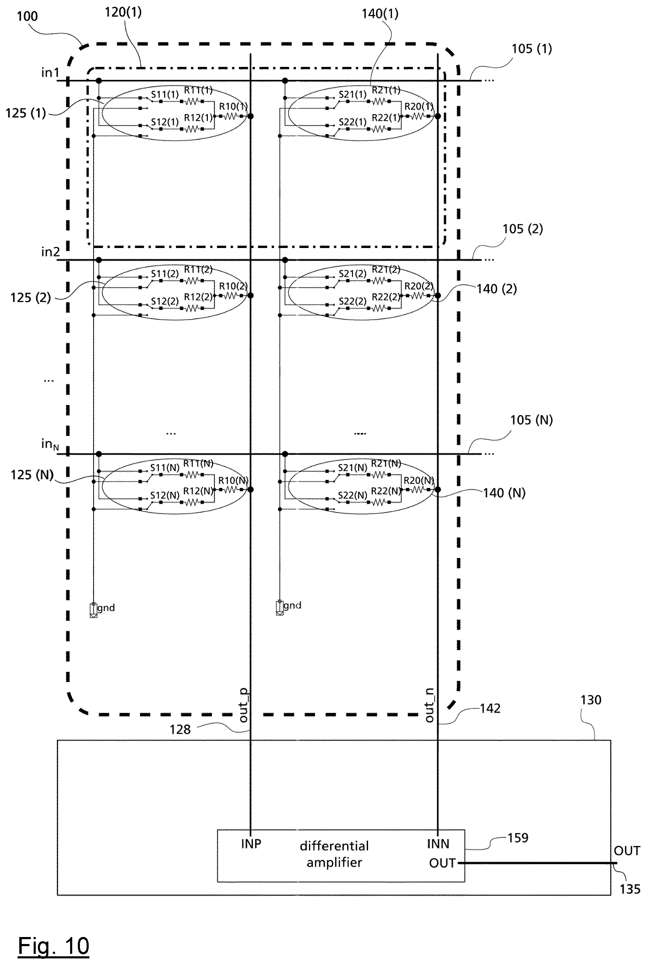

It is sometimes advantageous to increase the output impedance of the divider circuits 125(i) and 140(i) while not spending too much area for resistance. This can be accomplished by adding series resistors R10(i) and R20(i) to each divider circuit, respectively, as can be seen in the exemplary embodiment of Fig. 10. By this means, the summing impedance is more dominated by the more accurate device resistance, than by parasitic wiring resistance, and the output impedance at out_p and out_n can be higher for the same given accuracy. This approach provides an opportunity to tradeoff between resistor area and wiring area.

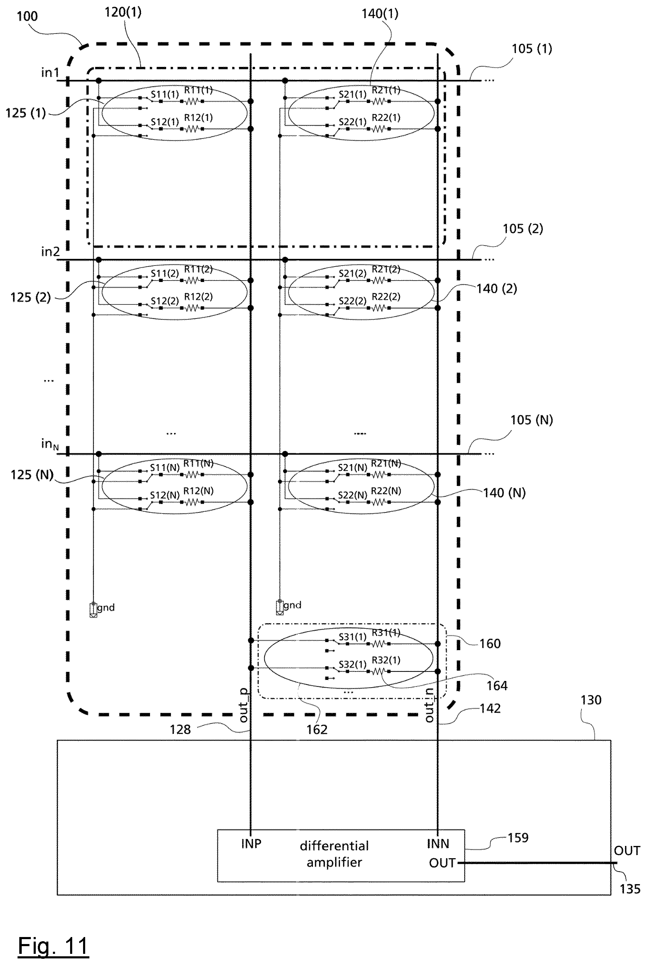

A further exemplary embodiment is depicted in Fig. 11, which shows the same circuit as in Fig. 9 but with an attenuator circuit 160 added and connected between out_p and out_n. With the selection of the switching state of the 2 x K switches S31(j), S32(j); j ∈ {1,...,K}, where K can be any positive integer number, there is the opportunity to set the overall gain of summation circuit 100.The accuracy of the factor of attenuation given by the attenuation resistors 164 (R31(j), R32(j)) is only based on matching of the divider elements 162 which are again chosen the same as the divider circuits 125 and 140 in the synapses.

The attenuator circuit 160 is made from K divider elements 162 located between out_p and out_n. Having k of K elements fully connected by the closed switches S31(j) and S32(j); j=1,...,k, as attenuator in the circuit, the output voltage is scaled by an additional factor

$$W_{Atten} = \frac{N}{2k + N} \; ; k \in [1, 2, ..., K]$$

This factor is again not dependent on the absolute value of the resistors. Thus, this factor only depends on matching between resistors.

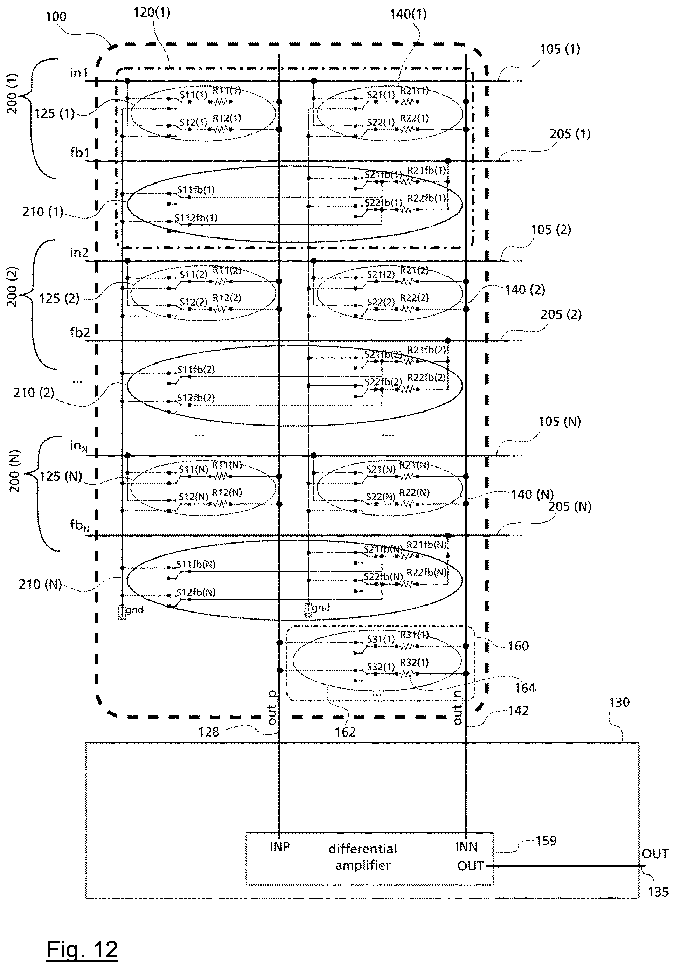

Fig. 12 shows a further embodiment of the proposed electronic circuit where the crossbar sends back information to the driving cell with the feedback circuit 210(i) via feedback lines 205(i). Each switch S11(i), S12(i), S21(i) and S22(i) of the $i^{th}$ synapse has a duplicated feedback switch S11fb(i), S12fb(i), S21fb(i) and S22fb(i), respectively, with the same state. The switches steer the left-hand connection of the resistors R21fb(i) and R22fb(i) to a common potential gnd or a different potential common for all these switches. On the right-hand side, the resistors R21fb(i) and R22fb(i) are connected to a feedback line 205(i) (fb(i)).

Since it is not useful to steer both positive, circuit 125 (i), and negative weight coefficients, circuit 140(i), R21fb(i) is used with both R11(i) and R21(i) while R22fb(i) is used together with R12(i) and R22(i) in the feedback circuit 210 (i). Therefore, R21fb(i) is used in junction with S11fb(i) and S21fb(i) whereas R21fb(i) is used in junction with S12fb(i) and S22fb(i). The impedance between fb(i) and the said common potential indicates the value of load to the input in(i).

Fig. 13 shows an implementation of the previous circuit using memristors. The memristors are considered to have a high impedance state and a medium resistance state. R11(i) consists of two resistors that are programmed in an alternating way to implement the switching functionality: either the upper resistor is at high impedance then the lower resistor is at medium resistance or the upper resistor is at medium impedance then the lower resistor is at high resistance. The same is with R12(i), R21(i) and R22(i). With this programming scheme, any voltage divider circuit 125(i) and 140(i) exhibits a medium impedance seen from the outputs independent of the "switching" state. To provide correct feedback, the number of resistors R11/21fb(i) and R12/22fb(i) programmed to medium impedance must match the number of upper resistors R11, R21, R12, R22 programmed to medium impedance.

LIST OF REFERENCE SIGNS

| | |
|---|---|
| 100 | Circuit (soma) |
| 105 | Input lines |
| 120 | Synapses |
| 125 | Coupling circuits |
| 128 | Output line |
| 130 | Conversion unit |
| 135 | OUT terminal |
| 140 | Coupling circuits |
| 142 | Second output line |
| 150 | Shunt circuit |
| 151 | Shunt circuit |
| 152 | Resistor |
| 153 | Resistor |
| 159 | Differential amplifier |
| 160 | Attenuator circuit |
| 162 | Divider elements |
| 164 | Attenuation resistors |
| 200(i) | Connections to the driver circuit of the $i^{th}$ input |
| 205 | Feedback line |
| 210 | Feedback circuit |

**Claims**

1. Electronic circuit for calculating weighted sums of input voltages ($in_i$), at least comprising several input lines (105(i)) to which the input voltages ($in_i$) are applied, and at least one summation unit (100) being formed of

   - a first and a second output line (128, 142),
   - several first coupling units (125(i)) connecting the input lines (105(i)) to the first output line (128), each of the first coupling units (125(i)) providing one or several individual weight factors for weighted coupling an input voltage

(in$_i$) on the corresponding input line (105(i)) to the output line (128), and

- several second coupling units (140(i)) connecting the input lines (in$_i$) to the second output line (142), each of the second coupling units (140(i)) providing one or several individual weight factors for weighted coupling an input voltage (in$_i$) on the corresponding input line (105(i)) to the output line (142),

wherein each of the first and second coupling units (125(i), 140(i)) comprises at least one voltage divider circuit, referenced to a common input potential (gnd), said voltage divider circuit allowing to set at least one of said weight factors by a ratio of at least two resistances, wherein the voltage divider circuits are arranged and/or controlled such that they are successively connected to the corresponding first or second output line along the output line, having the effect that a local cancelling of currents between successive voltage divider circuits occurs and an impedance seen from each output line (128, 142) into any of the coupling units (125(i), 140(i)) stays constant independent on the weight factors set, and

wherein each of the voltage divider circuits 125(i), 140(i)) comprises at least two switchable resistances, each of the switchable resistances being switchable between a connection to the common input potential (gnd) and a connection to the corresponding input line (105(i)), and

the two output lines (128, 142) are connected to a differential voltage measurement means (159), in particular a differential amplifier, providing the weighted sum as an output signal.

2. Electronic circuit according to claim 1,
   **characterized in**
   **that** the summation unit (100) comprises an attenuator circuit (160) for attenuation output signals of the two output lines (128, 142).

3. Electronic circuit according to one of claims 1 or 2,
   **characterized in**
   **that** the summation unit (100) comprises a feedback circuit (210(i)) for each couple of first and second coupling units (125(i), 140(i)) connected to the same input line (105(i)), wherein the feedback circuit (210(i)) is designed to provide a feedback signal (fb$_i$) on a feedback line 205 (i) to a driving stage for the input line (105(i)), which feedback signal (fb$_i$) provides information about a load to the input line (105(i)) by the voltage divider circuits (125(i), 140(i)).

4. Electronic circuit according to one of claims 1 to 3,
   **characterized in**
   **that** each voltage divider circuit (125(i), 140(i)) comprises an additional series resistance in order to increase an output resistance of the voltage divider circuit (125(i), 140(i)) and reduce a resulting current on the output line (128, 142).

5. Electronic circuit according to one of claims 1 to 4,
   **characterized in**
   **that** at least some of the resistances of the voltage divider circuits (125(i), 140(i)) are variable.

6. Electronic circuit according to one of claims 1 to 5,
   **characterized in**
   **that** the voltage divider circuits (125(i), 140(i)) are designed such that the weight factor may be set to one of at least two different available values.

7. Electronic circuit according to one of claims 1 to 6,
   **characterized in**
   **that** the switchable resistances are of equal resistance.

8. Electronic circuit according to one of claims 1 to 6,
   **characterized in**
   **that** the switchable resistances are of different resistance, in particular forming a binary weighted or a R-2R-switched network.

**Patentansprüche**

1. Elektronische Schaltung zum Berechnen gewichteter Summen von Eingangsspannungen (in$_i$), die mindestens mehrere Eingangsleitungen (105(i)), an die die Eingangsspannungen (in$_i$) angelegt werden, und mindestens eine Summiereinheit (100) umfasst, die ausgebildet ist aus:

- einer ersten und einer zweiten Ausgangsleitung (128, 142),

- mehreren ersten Kopplungseinheiten (125(i)), die die Eingangsleitungen (105(i)) mit der ersten Ausgangsleitung (128) verbinden, wobei jede der ersten Kopplungseinheiten (125(i)) einen oder mehrere individuelle Gewichtungsfaktoren zum gewichteten Koppeln einer Eingangsspannung ($in_i$) auf der entsprechenden Eingangsleitung (105(i)) mit der Ausgangsleitung (128) bereitstellt, und

- mehreren zweiten Kopplungseinheiten (140(i)), die die Eingangsleitungen ($in_i$) mit der zweiten Ausgangsleitung (142) verbinden, wobei jede der zweiten Kopplungseinheiten (140(i)) einen oder mehrere individuelle Gewichtungsfaktoren zum gewichteten Koppeln einer Eingangsspannung ($in_i$) auf der entsprechenden Eingangsleitung (105(i)) mit der Ausgangsleitung (142) bereitstellt,

wobei jede der ersten und der zweiten Kopplungseinheiten (125(i), 140(i)) mindestens eine Spannungsteilerschaltung umfasst, die auf ein gemeinsames Eingangspotential (gnd) bezogen ist, wobei die Spannungsteilerschaltung es ermöglicht, mindestens einen der Gewichtungsfaktoren durch ein Verhältnis von mindestens zwei Widerständen einzustellen, wobei die Spannungsteilerschaltungen derart angeordnet und/oder gesteuert werden, dass sie nacheinander mit der entsprechenden ersten oder zweiten Ausgangsleitung entlang der Ausgangsleitung verbunden werden, was dazu führt, dass eine lokale Aufhebung von Strömen zwischen aufeinanderfolgenden Spannungsteilerschaltungen erfolgt und eine von jeder Ausgangsleitung (128, 142) in eine beliebige der Koppeleinheiten (125(i), 140(i)) wahrgenommene Impedanz unabhängig von den eingestellten Gewichtungsfaktoren konstant bleibt, und

wobei jede der Spannungsteilerschaltungen (125(i), 140(i)) mindestens zwei schaltbare Widerstände umfasst, wobei jeder der schaltbaren Widerstände zwischen einer Verbindung mit dem gemeinsamen Eingangspotential (gnd) und einer Verbindung mit der entsprechenden Eingangsleitung (105(i)) umschaltbar ist, und die zwei Ausgangsleitungen (128, 142) mit einer Differenzspannungsmesseinrichtung (159), insbesondere einem Differenzverstärker, verbunden sind, wodurch die gewichtete Summe als ein Ausgangssignal bereitgestellt wird.

2. Elektronische Schaltung nach Anspruch 1,
   **dadurch gekennzeichnet,**
   **dass** die Summiereinheit (100) eine Abschwächungsschaltung (160) zum Abschwächen von Ausgangssignalen der beiden Ausgangsleitungen (128, 142) umfasst.

3. Elektronische Schaltung nach einem der Ansprüche 1 oder 2,
   **dadurch gekennzeichnet,**
   **dass** die Summiereinheit (100) eine Rückkopplungsschaltung (210(i)) für jedes Paar aus einer ersten und einer zweiten Kopplungseinheit (125(i), 140(i)), die mit derselben Eingangsleitung (105(i)) verbunden sind, umfasst, wobei die Rückkopplungsschaltung (210(i)) derart ausgelegt ist, dass sie ein Rückkopplungssignal ($fb_i$) auf einer Rückkopplungsleitung 205 (i) an eine Treiberstufe für die Eingangsleitung (105(i)) bereitstellt, wobei das Rückkopplungssignal ($fb_i$) Informationen über eine Belastung auf der Eingangsleitung (105(i)) durch die Spannungsteilerschaltungen (125(i), 140(i)) bereitstellt.

4. Elektronische Schaltung nach einem der Ansprüche 1 bis 3,
   **dadurch gekennzeichnet,**
   **dass** jede Spannungsteilerschaltung (125(i), 140(i)) einen zusätzlichen Serienwiderstand umfasst, um einen Ausgangswiderstand der Spannungsteilerschaltung (125(i), 140(i)) zu erhöhen und einen resultierenden Strom auf der Ausgangsleitung (128, 142) zu reduzieren.

5. Elektronische Schaltung nach einem der Ansprüche 1 bis 4,
   **dadurch gekennzeichnet,**
   **dass** mindestens einige der Widerstände der Spannungsteilerschaltungen (125(i), 140(i)) veränderbar sind.

6. Elektronische Schaltung nach einem der Ansprüche 1 bis 5,
   **dadurch gekennzeichnet,**
   **dass** die Spannungsteilerschaltungen (125(i), 140(i)) derart ausgelegt sind, dass der Gewichtungsfaktor auf einen von mindestens zwei verschiedenen verfügbaren Werten eingestellt werden kann.

7. Elektronische Schaltung nach einem der Ansprüche 1 bis 6,
   **dadurch gekennzeichnet,**
   **dass** die schaltbaren Widerstände einen gleichen Widerstand aufweisen.

8. Elektronische Schaltung nach einem der Ansprüche 1 bis 6,
   **dadurch gekennzeichnet,**
   **dass** die schaltbaren Widerstände einen unterschiedlichen Widerstand aufweisen und insbesondere ein binär gewichtetes oder ein R-2R-geschaltetes Netzwerk bilden.

## Revendications

1. Circuit électronique pour calculer des sommes pondérées de tensions d'entrée (in$_i$), comprenant au moins plusieurs lignes d'entrée (105(i)) auxquelles les tensions d'entrée (in$_i$) sont appliquées et au moins une unité de sommation (100) étant constituée de :

   - une première et une deuxième ligne de sortie (128, 142),
   - plusieurs premières unités de couplage (125(i)) connectant les lignes d'entrée (105(i)) à la première ligne de sortie (128), chacune des premières unités de couplage (125(i)) fournissant un ou plusieurs facteurs de pondération individuels pour un couplage pondéré d'une tension d'entrée (in$_i$) sur la ligne d'entrée correspondante (105(i)) à la ligne de sortie (128) et
   - plusieurs deuxièmes unités de couplage ((140(i)) connectant les lignes d'entrée (in$_i$) à la deuxième ligne de sortie (142), chacune des deuxièmes unités de couplage (140(i)) fournissant un ou plusieurs facteurs de pondération individuels pour un couplage pondéré d'une tension d'entrée (in$_i$) sur la ligne d'entrée correspondante (105(i)) à la ligne de sortie (142),
   dans lequel chacune des première et deuxième unités de couplage (125(i), 140(i)) comprend au moins un circuit diviseur de tension, référencé à un potentiel d'entrée commun (gnd), ledit circuit diviseur de tension permettant de régler au moins un desdits facteurs de pondération par un rapport d'au moins deux résistances, dans lequel les circuits diviseurs de tension sont agencés et/ou commandés de sorte qu'ils soient connectés successivement à la première ou deuxième ligne de sortie correspondante le long de la ligne de sortie, ayant comme effet qu'une annulation locale des courants entre les circuits diviseurs de tension successifs se produit et une impédance constatée depuis chaque ligne de sortie (128, 142) vers une quelconque des unités de couplage (125(i), 140(i)) reste constante indépendamment des facteurs de pondération réglés et
   dans lequel chacun des circuits diviseurs de tension (125(i), 140(i)) comprend au moins deux résistances commutables, chacune des résistances commutables étant commutable entre une connexion au potentiel d'entrée commun (gnd) et une connexion à la ligne d'entrée commune (105(i)) et
   les deux lignes de sortie (128, 142) sont connectées à un moyen de mesure de tension différentielle (159), notamment un amplificateur différentiel, fournissant la somme pondérée comme signal de sortie.

2. Circuit électronique selon la revendication 1, **caractérisé en ce que** l'unité de sommation (100) comprend un circuit atténuateur (160) pour l'atténuation des signaux de sortie des deux lignes de sortie (128, 142).

3. Circuit électronique selon une des revendications 1 ou 2, **caractérisé en ce que** l'unité de sommation (100) comprend un circuit de rétroaction (210(i)) pour chaque couple de première et deuxième unités de couplage (125(i), 140(i)) connectée à la même ligne d'entrée (105(i)), dans lequel le circuit de rétroaction (210(i)) est conçu pour fournir un signal de rétroaction (fb$_i$) sur le ligne de rétroaction 205(i) à un étage d'attaque de la ligne d'entrée (105(i)) lorsque le signal de rétroaction (fb$_i$) fournit des informations relatives à une charge à la ligne d'entrée (105(i)) par les circuits diviseurs de tension (125(i), 140(i)).

4. Circuit électronique selon une des revendications 1 à 3, **caractérisé en ce que** chaque circuit diviseur de tension (125(i), 140(i)) comprend une résistance de série supplémentaire de manière à augmenter une résistance de sortie du circuit diviseur de tension (125(i), 140(i)) et réduire un courant de résultat sur la ligne de sortie (128, 142).

5. Circuit électronique selon une des revendications 1 à 4, **caractérisé en ce que** au moins certaines des résistances des circuits diviseurs de tension (125(i), 140(i)) sont variables.

6. Circuit électronique selon une des revendications 1 à 5, **caractérisé en ce que** les circuits diviseurs de tension (125(i), 140(i)) sont conçus de sorte que le facteur de pondération puisse être réglé sur une d'au moins deux valeurs disponibles différentes.

7. Circuit électronique selon une des revendications 1 à 6, **caractérisé en ce que** les résistances commutables sont de résistance égale.

8. Circuit électronique selon une des revendications 1 à 6, **caractérisé en ce que** les résistances commutables sont de résistance différente, notamment formant un réseau pondéré binaire ou un réseau commuté R-2R.

Fig. 1 (Prior Art)

Fig. 2 (Prior Art)

Fig. 3 (Prior Art)

Fig. 4

Fig. 5

Fig. 6

Fig. 7

Fig. 8

Fig. 9

Fig. 10

Fig. 11

Fig. 12

**Fig. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018148293 A1
- US 2020034686 A1, CHIU PI-FENG
- US 20200130 A1

### Non-patent literature cited in the description

- **O. KRESTINGSKAYA** ; **B. CHOUBEY** ; **A. P. JAMES**. Memristive GAN in Analog. *Scientific Reports*, 2020 (10-5838), 1-14
- **VO MINH-HUAN**. Multilayer Neural Network with Synapse Based on Two Successive Memristors. *THE OPEN ELECTRICAL & ELECTRONIC ENGINEERING JOURNAL*, 31 December 2018, vol. 12 (1), 1874-1290, 132-147